# EUROPEAN PATENT SPECIFICATION

(11) **EP 2 993 085 B1**
(45) Date of publication and mention of the grant of the patent: **16.08.2017**
(21) Application number: 14183151.1
(22) Date of filing: 02.09.2014
(51) Int. Cl.: B60R 5/04, B60R 21/06

(54) **Attachment element and attachment arrangement for cargo protection device**
Befestigungselement und Befestigungsanordnung für Frachtschutzvorrichtung
Élément de fixation et dispositif de fixation pour dispositif de protection de cargaison

(43) Date of publication of application: 09.03.2016
(73) Proprietor: Volvo Car Corporation, 40531 Göteborg (SE)
(72) Inventor: Svensson, Birger, 42932 Kullavik (SE); Nilsson, Tomas, 43932 Onsala (SE)
(74) Representative: Volvo Car Corporation

(56) References cited:
- DE-B3-102013 010 884
- US-A1- 2012 256 437

## Description

### TECHNICAL FIELD

The present disclosure relates to an attachment element for a cargo protection device, adapted for attachment of the cargo protection device to an interior of a vehicle. The disclosure further relates to an attachment arrangement, a cargo protection device, a vehicle, a method for attaching the attachment element or the cargo protection device and a method for detaching the attachment element or the cargo protection device.

### BACKGROUND

It is well known to use a cargo protection device in a vehicle in order to protect the users of the vehicle from cargo being thrown from the luggage compartment onto the users of the vehicle, e.g. when braking the vehicle, or in case of a collision. The cargo protection device may e.g. comprise a net. The upper corners of the cargo protection device are, when in use, attached to an interior of the vehicle, e.g. to a ceiling of the vehicle or to upper side walls, and the lower corners may e.g. be attached to the interior of the vehicle or to a rear seat.

The background section of document EP1595745A1 discloses an attachment arrangement for attaching a cargo protection device to a vehicle interior. The cargo protection device comprises a reinforcing bar along its upper edge extending in a width direction of the vehicle. Each end of the bar is provided with an attachment element for connection to a respective receptacle at the vehicle interior. A flange in a disc-like shape is formed integrally with a protruding end of the attachment element, such that the attachment element comprises a head having a larger diameter than a shaft of the attachment element. The receptacle is provided with a guide groove resembling the letter T in section, formed for engaging the flange of the attachment element. In order for the attachment element to reach a retaining position, it is passed over a ridge in the groove.

Document EP1595745A1 further describes the disadvantages of the attachment arrangement disclosed in the background section embodiment, in that two hands are needed for attaching the attachment element. Document EP1595745A1 therefore suggests an attachment arrangement comprising a receptacle which has been configured, such that the attachment of it is possible by one hand. The head of the attachment element is then entered vertically into the receptacle from below.

However, the receptacle of the attachment arrangement of EP1595745A1 is somewhat complicated to manufacture. Further, in order to enter the head into the receptacle from below, sufficient space is needed.

According to EP1595745A1 the attachment element is held in the retaining position after having been passed over the ridge in the groove. In order to release the attachment element again, it is passed over the ridge by a displacement in the opposite direction. However, there is always a risk that this displacement occurs unintentionally, causing the attachment element to accidentally slip out of the retaining position.

Document DE 10 2013 010884 B3 discloses an attachment element according to the preamble of claim 1 and a safety net for a passenger car, for disconnecting passenger and luggage compartments. The cargo protection device has a holding element on which pressurized spring tension acts in opposite axial directions according to inner and outer end positions of a hook.

Document US2012256437 A1 discloses a barrier net mounting structure may including a roof bracket provided on a head lining, and a hook provided on a lateral portion of a barrier net and inserted into the roof bracket, wherein the hook includes a rod having one end provided on the lateral portion of the barrier net, and the other end inserted into the roof bracket, and a locking portion and a stopper portion which may be provided on the other end of the rod in a spaced state there between, wherein one end of the locking portion may be locked to an inner surface of the roof bracket, and one end of the stopper portion may be supported by an outer surface of the roof bracket.

There is thus a desire for an improved attachment arrangement.

### SUMMARY

The object of the present disclosure is to overcome or ameliorate at least one of the disadvantages of the prior art, or to provide a useful alternative.

The object above may be achieved by the subject-matter of claim 1.

Thus, in a first aspect of the present invention there is provided an attachment element for attachment of a cargo protection device to an interior of a vehicle. The attachment element comprises a holding portion and an attachment portion. The holding portion is adapted to be located at least partly in or at a corner of the cargo protection device, which corner is intended to be at an upper position in a vertical direction, when the cargo protection device is mounted in the vehicle. The attachment portion is adapted for attachment of the attachment element to the interior of the vehicle and comprises a shaft and a head located at a distal end of the shaft, the head having a cross-sectional dimension being larger than a cross-sectional dimension of the shaft. A distal end region of the shaft comprises at least a first cross-sectional dimension, which is less than a second cross-sectional dimension of the end region. The cross-sectional dimension of the head is larger than the first and second cross-sectional dimensions.

Positional references used herein, such as upper, lower, back and front, relate to when the cargo protection device is mounted in the interior of the vehicle. However, the cargo protection device is normally configured to allow it to be dismounted from the interior of the vehicle, and stored or transported as folded and/or rolled. The cargo protection device may be sold as a separate item or it may be sold together with the vehicle.

The attachment element is adapted for easy attachment to the vehicle, preferably without any use of tools. The attachment elements are suitably used to attach upper corners of the cargo protection device to the vehicle interior. The attachment elements may be made of a rigid material, e.g. a metal or an alloy, such as steel, or of a composite, e.g. comprising plastics or a ceramic material. They help to receive and distribute impact forces in case of a collision involving the vehicle, e.g. a frontal collision pushing the cargo forwards against the cargo protection device.

The attachment portion of the attachment element comprises a shaft and a head located at a distal end of the shaft. The head is adapted to fit into a receiving receptacle in the ceiling and/or in an upper portion of a side wall of the vehicle. The head may have a round, oval, elliptic, square, polygonal, or any other regular or irregular shape. The receptacle has a shape and size adapted to receive the head. The receptacle is further described below.

The shaft comprises the end region, which is located adjacent to the head, i.e. at the distal end of the shaft. The end region has a length x, which is determined in an extension direction of the shaft. The length x corresponds to how deep the attachment portion may preferably be inserted into the receptacle and 0 < x ≤ 20 mm, preferably 2 mm ≤ x ≤ 15 mm, more preferably 4 mm ≤ x ≤ 10 mm.

The size of the attachment element is typically much less than the size of the cargo protection device, e.g. the length of the holding portion being between 50 and 600 mm, preferably between 100 and 400 mm, more preferably between 150 and 300 mm and the length of the attachment portion being between 10 and 200 mm, preferably between 20 and 150 mm, more preferably between 50 and 100 mm.

Typically, the cargo protection device comprises four corners, two of which are intended to be located at an upper position in the vertical direction, when the cargo protection device is mounted in a vehicle, i.e. upper corners, and two additional corners, which are intended to be located at a lower position in the vertical direction, when the cargo protection device is mounted in a vehicle, i.e. lower corners. The attachment element as described herein is intended to be used in or at one or both of the two upper corners.

The term cross-sectional dimension as used herein passes a geometrical centre of a cross-sectional plane. The cross-sectional plane is transverse to the extension direction of the shaft. If the cross-section is circular, the cross-sectional dimension is the diameter. In case the shape of the cross-section is other than circular, the cross-sectional dimension is determined as the largest cross-sectional dimension passing through the geometrical centre of the cross sectional plane.

The cross-sectional planes of the first and second cross-sectional dimensions are located adjacent to each other in the end region and may even coincide. They are thus adjacent to the distal end of the shaft. The first cross-sectional dimension may be a diameter of the shaft, if the shaft has a circular cross-section. The first cross-sectional dimension may be the smallest cross-sectional dimension of the shaft in the end region and the second cross-sectional dimension may be the largest cross-sectional dimension of the shaft in the end region.

The second cross-sectional dimension may be located closer to the head than the first cross-sectional dimension, such that the first and second cross-sectional dimensions are determined at different distances from the head.

The first and second cross-sectional dimensions may be located at different positions around the circumference of the shaft, either at the same distance from the head or at different distances from the head. This may e.g. be the case if the shaft comprises at least one protrusion located at the circumference of the shaft and the second cross-sectional dimension intersects at least one of the at least one protrusion. Hence the at least one protrusion is at least partly located in the end region.

The holding portion of the attachment element may comprise a first leg and a second leg, the first leg being adapted to extend in a first direction substantially parallel to a first edge of the cargo protection device, which first edge is intended to be an upper edge, and the second leg being adapted to extend in a second direction substantially parallel to a second edge of the cargo protection device, which second edge is intended to be a side edge. Purely as an example, an angle α formed between the first and second directions may be 90° or substantially 90°. However, since the ceiling of many vehicles typically has a certain curvature, the angle may be over 90°, e.g. 90° < α < 110°. The shaft of the attachment portion is adapted to extend in a third direction, which third direction has a first component in a direction opposite to the first direction and a second component in a direction opposite to the second direction. The third direction of the attachment portion forms an angle β₁ with the first direction and an angle β₂ to the second direction. The angles β₁, β₂ may be substantially equal, e.g. about 120°. Such an attachment element is suitable for a cargo protection device not having any stiff structure along its upper edge.

The attachment element may be configured such that it is symmetric in relation to a first symmetry plane of the cross-section. The first symmetry plane may be a plane spanned by the attachment element, e.g. spanned by first leg, the second leg and the shaft. The cross-section of the end region is in that case symmetric in relation to the first symmetry plane. This may be achieved by the at least one protrusion being symmetric in relation to the first symmetry plane. Also the rest of the attachment portion and the holding portion are symmetric. Thereby, there the attachment element will look the same at both the left-hand side of the vehicle interior and the right-hand side of the vehicle interior. Hence the same kind of attachment element may be used at both upper corners of the cargo protection device. There is then no need for a special left-hand side attachment element and a special right-hand side attachment element. Thereby the number of components can be reduced. Further, the risk of mounting a wrong attachment element, e.g. mounting a left-hand side attachment element at the right-hand side is reduced or avoided. This is hence beneficial from a financial, manufacturing and/or process reliability perspective.

The attachment element may be configured such that it is symmetric in relation to a second symmetry plane, which may substantially coincide with a longitudinal direction of the vehicle, when the attachment element has a position as mounted in the vehicle interior. The second symmetry plane is substantially perpendicular to the first symmetry plane. In the embodiments mentioned above comprising protrusions located at the shaft, this may for example be obtained by having an even number of protrusions, e.g. two protrusions with corresponding shapes at radially opposite locations of the shaft, with one upper and one lower protrusion. Also the rest of the attachment portion is in that case symmetric in relation to the second symmetry plane. If the holding portion comprises the first leg and the second leg, as described above, they may have corresponding shapes, such that the whole attachment element is symmetric in relation to the second symmetry plane. The attachment element would look the same also when interchanging the positions of the first leg and the second leg. Hence there is for this embodiment no risk of mounting the attachment element in a wrong up-and-down position. This is beneficial from a financial, manufacturing and/or process reliability perspective.

The attachment element may be configured such that it is symmetric in relation to both the first symmetry plane and the second symmetry plane. Thereby the number of components of the cargo protection device can be reduced. Further, the risk of mounting a wrong attachment element, e.g. mounting a left-hand side attachment element at the right-hand side is avoided. Also the risk of mounting the attachment element upside down is avoided. This is hence beneficial from a financial, manufacturing and/or process reliability perspective.

The attachment element as described herein is intended to be received by a receptacle located in the vehicle interior. The receptacle comprises an entering portion having a shape and a cross-sectional dimension adapted to receive a head of the attachment element, a waist portion having a cross-sectional dimension, which is less than the cross-sectional dimension of the entering portion, and a locking portion having a cross-sectional dimension, which is larger than the cross-sectional dimension of the waist portion but less than the cross-sectional dimension of the entering portion. The waist portion is located between the entering portion and the locking portion.

The locking portion allows the attachment element to be held in a retaining position, with the cargo protection device mounted in the vehicle. The cargo protection device then is held in place by gravity and/or a tensioning force used to tension the cargo protection device.

The receptacle may comprise a closed circumference. The closed circumference of the receptacle implies that head of the attachment element is entered laterally into the receptacle, i.e. the head is displaced outwards in relation to a longitudinal centre-line of the vehicle. This differs from some prior art receptacles, wherein the attachment element is entered from vertically below and pushed upwards into the receptacle, as e.g. disclosed in EP1595745A1.

The waist portion may be located at a higher position in the vertical direction than the entering portion and/or locking portion, when the receptacle is oriented as when mounted in a vehicle interior. Thereby a displacement against gravity and/or against the tensioning force of the cargo protection device is needed to move the attachment element from the entering portion into the waist portion, when attaching the attachment element to the receptacle. Correspondingly, a displacement against gravity and/or against the tensioning force of the cargo protection device is needed to move the attachment element from the locking portion into the waist portion, when detaching the attachment element from the receptacle. In particular, the centre of the waist portion may be located at a higher vertical position than the centre of the entering portion, when mounted in the vehicle interior.

In a second aspect of the present invention, there is provided an attachment arrangement comprising an attachment element as described herein and a receptacle as described above, wherein the shape and the cross-sectional dimension of the entering portion of the receptacle are adapted to receive the head of the attachment element, the cross-sectional dimension of the waist portion is less than the second cross-sectional dimension of the shaft but larger than the first cross-sectional dimension of the shaft, and the cross-sectional dimension of the locking portion is larger than the first cross-sectional dimension of the shaft but less than the cross-sectional dimension of the head.

In the attachment arrangement, the attachment element and the receptacle are configured to cooperate with each other, such that the attachment element may be entered into the receptacle via the entering portion, be passed through the waist portion and then be held in the locking portion with the head being located in the receptacle and the shaft protruding from the receptacle.

The cross-sectional dimension of the locking portion of the receptacle may also be larger than the second cross-sectional dimension of the shaft of the attachment element but less than the cross-sectional dimension of the head, such that the attachment element will abut with its head against an inner surface of the receptacle when the attachment element is retained by the receptacle.

The receptacle may have a depth configured to allow the attachment element to be pushed a distance into the entering portion of the receptacle, the distance allowing both of the first and second cross-sectional dimensions of the attachment element to be located inside the receptacle. The distance may preferably correspond to the length of the end region of the shaft.

In a third aspect of the present invention, there is provided a cargo protection device having two corners intended to be at an upper position in a vertical direction, when the cargo protection device is mounted in a vehicle. The cargo protection device comprises a foldable and/or rollable fabric portion, and at least one attachment element as described herein located in or at one or more of the corners.

The cargo protection device may be used to separate a passenger compartment from a luggage compartment of the vehicle. In particular, the cargo protection device prevents cargo from being thrown in a forward direction and hitting the users of the vehicle, in case of e.g. a frontal collision. The cargo protection device may thus be used as a partitioning wall.

The fabric portion forms a main portion of the cargo protection device. The fabric portion is made of a flexible material, such that it may be folded and/or rolled. Suitable materials are a fabric, a net, a plastic film or a combination of such materials. The fabric portion is preferably at least partly transparent, such that it is possible for the driver of the vehicle to see through it when looking backwards in the vehicle, e.g. through a mirror.

The cargo protection device typically has a shape of substantially a rectangle, a square, or a trapezium. The shape is preferably adapted to the vehicle, wherein it is intended to be mounted, e.g. the upper edge may be shaped to follow the curvature of the ceiling of the vehicle.

The cargo protection device may be adapted to occupy a front position in the vehicle located behind a backrest of the driver's seat and a backrest of a seat of a possible front passenger. The cargo protection device then protects the driver and a possible front seat passenger. The cargo protection device may as an alternative, or a complement, be adapted to occupy a back position. The backrests of the back seats are then in a substantially upright position, suitable for passengers in the back seat. The cargo protection device in the back position may extend substantially from the ceiling to a floor of the luggage compartment. Normally, the cargo protection device is adapted to be suitable for use at both the front position and the back position. It is also feasible to use more than one cargo protection device in the vehicle, e.g. one at the front position and one at the back position.

With the cargo protection device according to the invention, it is possible to omit using an elongated stiff element, such as one or more stiff bars along the upper edge of the fabric portion, which is commonly used according to prior art technology. In fact, it is according to the invention possible to provide a cargo protection device without any other stiff element than the attachment element/s, such that the cargo protection device may be folded and/or rolled as a whole. This also keeps the weight of the cargo protection device low and reduces its cost.

The fabric portion of the cargo protection device may comprise an edge trim, the edge trim also being foldable and/or rollable, the edge trim being formed in one part and enclosing at least 50%, preferably at least 70%, more preferably at least 90%, most preferably substantially all of a circumference of the fabric portion. The edge trim by itself is not rigid, and the edge trim will easily bend. The edge trim does thus not comprise a stiff bar. It would in principle be possible to insert a bar in the edge trim, but that would make it non-foldable and rollable only in one direction. The edge trim may comprise, or be constituted by a band, e.g. a band similar to the bands which are used as safety belts. Such an edge trim may be folded and/or rolled, and is yet strong enough to withstand a considerable force, if pulled in its length direction. The edge trim may be double-folded to form a channel for receiving the holding portion of the attachment element.

In a fourth aspect of the present invention, there is provided a vehicle comprising an attachment arrangement as described herein and/or a cargo protection device as described herein.

The vehicle may comprising a foldable back seat, wherein the height of the cargo protection device is adapted to substantially cover the interspace between the back seat in a folded position and a ceiling of the vehicle. In particular, the configuration of the attachment arrangement and/or a cargo protection device may be chosen, such that the cargo protection device substantially follows the shape of the ceiling, which typically has a certain curvature.

In a fifth aspect of the present invention, there is provided method for attaching an attachment element as described herein or a cargo protection device as described herein to an interior of a vehicle, the vehicle comprising a receptacle as described herein. The method comprises
a) entering the head of the shaft of the attachment element through the entering portion of the receptacle,
b) adjusting the attachment element to a position relative to the receptacle allowing the shaft to pass the waist portion at the first cross-sectional dimension,
c) passing the attachment element through the waist portion of the receptacle into the locking portion of the receptacle.

In step b), the attachment element may be adjusted by pushing it into the cavity of the receptacle, such that the shaft can pass the waist portion at the first cross-sectional dimension. If there is any protrusion/s around the shaft, it is/ they are then pushed into the cavity, such that they are out of the way of the waist portion and the shaft can be passed through the waist portion at the first cross-sectional dimension. When the head has reached the locking portion, the push-in force is released and the attachment element will go back to its normal relative position due to gravity and/or the tensioning force of the cargo protection device, allowing the cargo protection device to hang in a substantially vertical direction.

As an alternative to, or a complement to, pushing in the attachment element in step b), the attachment element may be adjusted by rotating it, such that the shaft can pass the waist portion at the first cross-sectional dimension. If there is any protrusion/s around the shaft, it is/ they are then rotated out of the way, such that the shaft can pass the waist portion at the first cross-sectional dimension. When the head has reached the locking portion, the rotation is released and the attachment element will go back to its normal relative position, due to gravity and/or the tensioning force of the cargo protection device, allowing the cargo protection device to hang in a substantially vertical direction.

For some embodiments of the attachment element according to the invention only one of the adjustment methods, to rotate or to push in, may be required or feasible. Purely as an example, for an attachment element having a collar, the attachment element should be pushed in to be passed through the waist region. Purely as another example, if the height of the optional one or more protrusions is equal to or greater than the length of the end region, the attachment element should be rotated to pass the waist region with its head being in the receptacle. For other embodiments, both push-in and rotation to pass the waist region would work.

A method for mounting the cargo protection device as described herein to the interior of the vehicle, may comprise
I. Attaching the lower edge and/or the lower corners of the cargo protection device to the interior of the vehicle.
II. Attaching the upper corners of the cargo protection device to the interior of the vehicle at a ceiling, or at a respective upper portion of a respective side wall of the vehicle, by means of the attachment elements with the method described above, see steps a)-c).

The method is easy and quick to perform.

The cargo protection device may be provided with a built-in elasticity, which may be utilized during mounting. Purely as an example, the lower attachment means and/or the fabric portion may be elastic. The built-in elasticity may be used when attaching the attachment elements of the upper corners with the method described above, see steps a)-c). The built-in elasticity is then used when passing the attachment element through the waist region, which may be at a vertically higher level than the entering portion of the receptacle, as described above. The built-in elasticity may provide a tensioning force of the cargo protection device helping to keep the cargo protection device in place in the locking portion of the receptacle.

Step II may, as an alternative to the order above, be performed before step I, i.e. the upper edge and/or corners being attached before the lower corners. Steps I and II may also be performed mixedly, e.g. performing step a) above, then step I, and thereafter steps b) and c).

The method may further optionally comprise
III. Tensioning the cargo protection device by applying a tension force at a lower portion of the cargo protection device, preferably at the lower edge of the fabric portion, more preferably at, or adjacent to, one or each of the lower corners of the fabric portion.

Step III may comprise applying the tensioning force by tightening a belt or strap.

Step I may be performed as a part of optional step III, such that the lower attachments are used to tension the cargo protection device.

Step III may be split in two portions. Purely as an example, the cargo protection device may be hung up in the entering portion of the receptacle, step a) of step II. Then step I may be performed. Thereafter the cargo protection device is tensioned, first portion of step III, and thereafter steps b) and c) of step II are performed. Thereafter a final tensioning of the cargo protection device is performed, second portion of step III. The tensioning force will help to keep the cargo protection device in place in the locking portion of the receptacle.

In a sixth aspect of the present invention, there is provided method for detaching an attachment element as described herein or a cargo protection device as described herein from an interior of a vehicle, the vehicle comprising a receptacle as described herein. The method comprises:
d) adjusting the attachment element to a position relative to the receptacle allowing the shaft to pass the waist portion at the first cross-sectional dimension,
e) passing the attachment element through the waist portion of the receptacle into the entering portion of the receptacle, and
f) retracting the head of the shaft of the attachment element from the entering portion of the receptacle.

The adjustment may be performed by pushing in or rotation of the attachment element in a corresponding way as described above for the method for attaching the attachment element.

A method for dismounting the cargo protection device as described herein from the interior of the vehicle may comprise:
V. Detaching the upper corners of the cargo protection device from the interior of the vehicle by means of detaching the attachment elements with the method described above, see steps d)-f).
VI. Detaching the lower edge and/or lower corners of the cargo protection device from the interior of the vehicle.

Step VI may be performed before step V i.e. the lower edge and/or lower corners being detached before the upper corners.

The above-mentioned built-in elasticity of the cargo protection device may be utilized when performing steps V and/or VI.

The method may further optionally comprise
IV. Releasing the tensioning force applied to the cargo protection device.

Step IV is normally performed before steps V and VI. Step IV may comprise releasing the tensioning force, e.g. by untightening or opening a belt or strap. Step IV is normally performed in case step III was performed when mounting the cargo protection device.

### BRIEF DESCRIPTION OF THE DRAWINGS

The present invention will hereinafter be further explained by means of non-limiting examples with reference to the appended drawings wherein:
- Fig. 1: is a schematic view of a portion of an interior of a vehicle illustrating a cargo protection device according to the invention mounted in a front position,
- Fig. 2: is a schematic view of an attachment element according to a first embodiment of the invention,
- Fig. 3: is a cross-sectional view of the attachment element of Fig. 1,
- Fig. 4: is a schematic view of an attachment element according to a second embodiment of the invention,
- Fig. 5: is a schematic view of an attachment element according to a third embodiment of the invention,
- Fig. 6: is a schematic view of an attachment element according to a fourth embodiment of the invention,
- Fig. 7: is a schematic view of an attachment element according to a fifth embodiment of the invention,
- Fig. 8: is a schematic view of an attachment element according to a sixth embodiment of the invention,
- Fig. 9: is a schematic view of an attachment element according to a seventh embodiment of the invention,
- Fig. 10: is a schematic view of a receptacle according to the invention,
- Fig. 11: illustrates a method for attaching an attachment element according to the invention,
- Fig. 12: illustrates a push-in adjustment of the attachment element,
- Fig. 13: illustrates the attachment element when retained,
- Fig. 14: illustrates a rotation adjustment of the attachment element, and
- Fig. 15: illustrates a method for detaching an attachment element according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

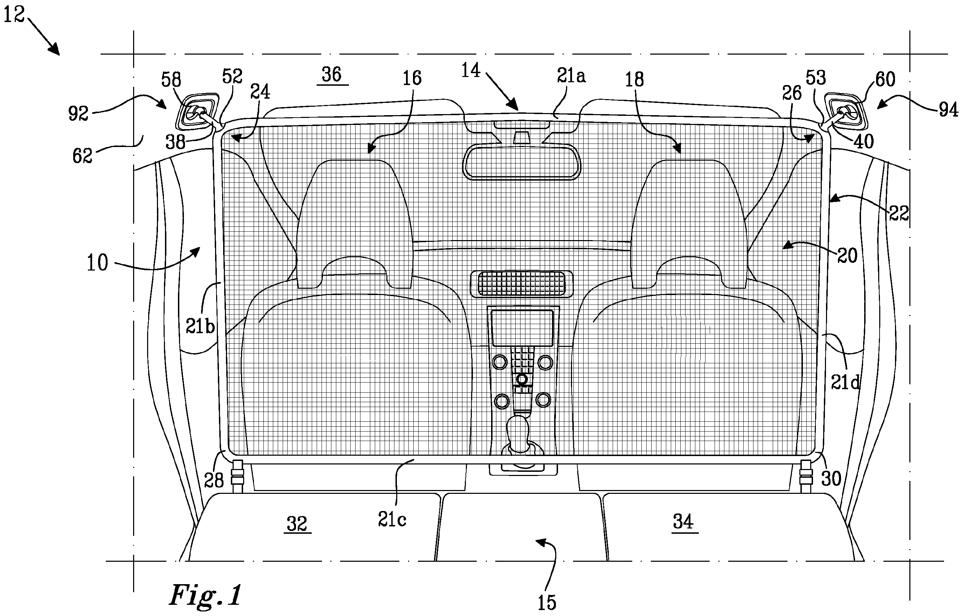

Figure 1 schematically illustrates a portion of an interior 10 of a vehicle 12. A cargo protection device 14 is attached in a position, wherein the cargo protection device 14 will help to protect users of the vehicle from cargo being thrown from the luggage compartment 15 onto the users of the vehicle, e.g. when braking the vehicle 12. The cargo protection device 14 of Figure 1 occupies a front position located behind a backrest 16 of a driver's seat and a backrest 18 of a seat of a possible front passenger. The cargo protection device 14 then protects the driver and a possible front seat passenger.

The cargo protection device 14 comprises a fabric portion 20 forming a main portion of the cargo protection device 14. The fabric portion 20 is made of a flexible material, such that it may be folded and/or rolled. Suitable materials are a fabric, a net, a plastic film or a combination of such materials. Figure 1 illustrates a fine net. The fabric portion 20 is preferably at least partly transparent, such that it is possible for the driver of the vehicle to see through it when looking backwards in the vehicle 12, e.g. looking via a mirror.

Positional references used herein, such as upper, lower, back and front, relate to when the cargo protection device 14 is mounted in the interior 10 of the vehicle 12. However, the cargo protection device 14 can be arranged to allow it to be dismounted from the interior 10 of the vehicle 12, and stored or transported as folded and/or rolled. The cargo protection device 14 may be sold as a separate item or it may be sold together with the vehicle 12.

The cargo protection device 14 comprises an upper edge 21 a, a first side edge 21 b, a lower edge 21c and a second side edge 21 d. The fabric portion 20 comprises an edge trim 22, e.g. made of a band. The edge trim 22 is preferably also made of a flexible material, such that it may be folded and/or rolled together with the rest of the fabric portion 20. The edge trim 22 may e.g. comprise a band similar to the bands, which are used as safety belts.

The edge trim 22 is preferably formed in one part and encloses a circumference of the fabric portion 20. The edge trim 22 is attached to the rest of the fabric portion 20. It may e.g. be sewn to and/or glued to the rest of the fabric portion 20. The edge trim 22 may be used to distribute forces applied at the fabric portion 20, e.g. from the cargo, in case of a braking or a collision, to attachment points to the vehicle interior 10 at upper corners 24, 26 and lower corners 28, 30 of the cargo protection device 14. The edge trim 22 is typically made of a stronger material than the rest of the fabric portion 20. Since the edge trim 22 is located at the circumference of the fabric portion 20 it is acceptable that the edge trim is not transparent. The edge trim 22 may be used to tension the fabric portion 20.

The cargo protection device 14 has a height, which is adapted to substantially cover the interspace between a back rest 32, 34 of a back seat in a folded position and a ceiling 36 of the vehicle 12. Thereby, the cargo protection device 20 covers the lateral interspace between the backrest 16 of the driver's seat and the backrest 18 of the seat of a possible front passenger, such that cargo cannot pass in between the two front seats.

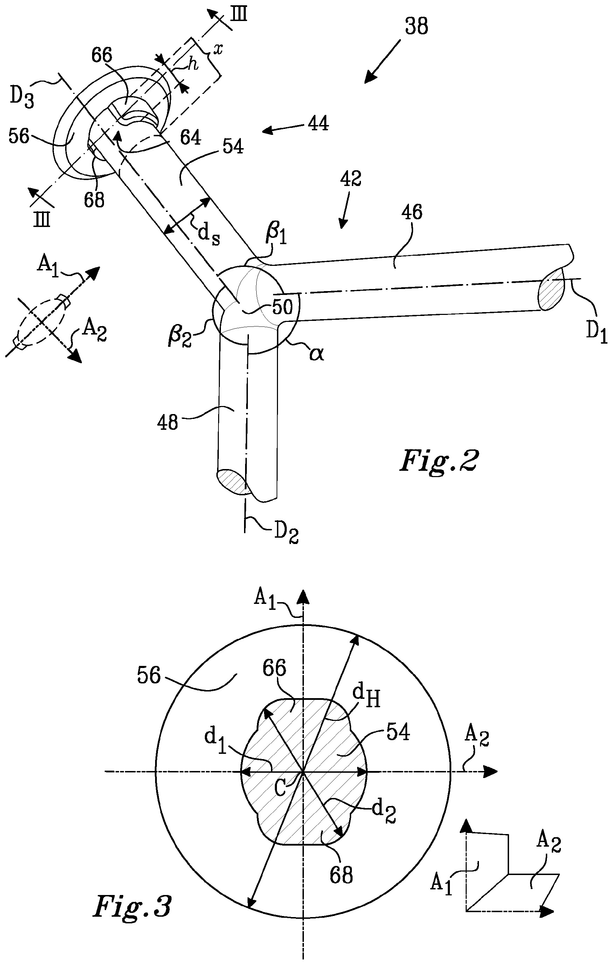

At least one, preferably each, of the upper corners 24, 26 of the cargo protection device 14 comprises an attachment element 38, 40, which is described in detail in conjunction with Figures 2 and 3. The attachment elements 38, 40 are used to attach the upper corners 24, 26 of the cargo protection device 14 to the vehicle interior 10. The attachment elements 38, 40 may be made of a rigid material, e.g. a metal or an alloy, such as steel, or of a composite, e.g. comprising plastics or a ceramic material. They help to receive and distribute impact forces in case of a collision involving the vehicle 12, e.g. a frontal collision pushing the cargo forwards against the cargo protection device 14.

As an alternative to the front position illustrated in Figure 1, the cargo protection device 14 may as an alternative or a complement be attached in a back position, not illustrated. The backrests 32, 34 of the back seats are then in a substantially upright position, suitable for passengers in the back seat. The cargo protection device 14 in the back position extends substantially from the ceiling 36 to a floor of the luggage compartment 15. Normally, the cargo protection device 14 and the vehicle interior 10 are adapted for use at both the front position and the back position. It is also feasible to use more than one cargo protection device 14 in the vehicle 12, e.g. one at the front position and one at the back position.

As may be gleaned from Figure 2, the attachment element 38 comprises a holding portion 42 and an attachment portion 44. The holding portion 42 comprises a first leg 46 and a second leg 48 connected by a central portion 50. The central portion 50 is in the illustrated case rather short. It bridges the legs 46, 48 and provides a suitable location for fixing the attachment portion 44 to the rest of the attachment element 38. If the attachment element 38 is made of a metal or alloy, such as steel, the attachment portion 44 may be welded to the central portion 50. The edge trim 22 of the fabric portion 20 comprises a channel in which the legs 46, 48 are adapted to be at least partly inserted. The edge trim hence has openings 52, 53 through which the attachment portion 44 protrudes from the central portion 50.

The first leg 46 extends from the central portion 50 in a first direction D₁ and the second leg 48 extends from the central portion 50 in a second direction D₂, such that the first D₁ and second directions D₂ in an untensioned state, as in Figure 2, form an angle α with each other. The angle α is preferably chosen, such that the cargo protection device 14 substantially follows the shape of the ceiling 36. The angle α may be 90° or substantially 90°. However, since the ceiling of many vehicles typically has a certain curvature, the angle may be over 90°, e.g. 90° < α < 110°.

In the illustrated embodiment, the first leg 46 and the second leg 48 are straight. However, if the legs 46, are not straight, e.g. the holding portion 42 has an arcuate shape, the directions D₁, D₂ of the respective legs 46, 48 are determined as the direction of a tangent at the ends of the respective legs 46, 48.

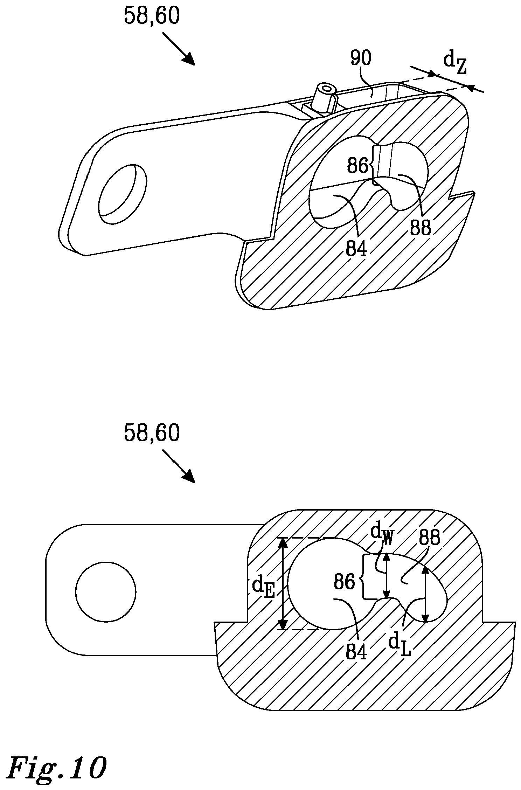

The attachment portion 44 comprises a shaft 54 and a head 56 located at a distal end of the shaft 54. The attachment element 38 is adapted for easy attachment to the vehicle, preferably without any use of tools. The illustrated embodiment shows a disc-shaped head 56 adapted to fit into a receiving receptacle 58, 60 in the ceiling 36 and/or in an upper portion of a side wall 62 of the vehicle 12. The head 56 may also have an oval, elliptic, square, polygonal or any other regular or irregular shape. In any case, the receptacle 58, 60 has a shape and size adapted to receive the head 56. The receptacle 58, 60 is further described below in conjunction with Figure 10.

The shaft 54 of the attachment portion 44 extends from the central portion 50 in a third direction D₃, which is partly opposite to the first direction D₁ and partly opposite to the second direction D₂. The third direction D₃ of the attachment portion 44 forms an angle β₁ with the first direction D₁ and an angle β₂ to the second direction D₂. The angles β₁, β₂ may be substantially equal, e.g. about 120°. The attachment portion 44 is non-rotationally connected to the holding portion 42. There is hence no rotational movement between the attachment portion 44 and the holding portion 42, even when the fabric portion 20 is tensioned.

The head 56 has a cross-sectional dimension d_{H}, here defined by a diameter since the cross-section is circular. See Figure 3. In case the head 56 has a shape other than circular, the cross-sectional dimension d_{H} is determined as the largest cross-sectional dimension passing through a geometrical centre C of the cross section of the head 56.

The shaft 54 has a cross-sectional dimension d_{S}, here defined by a diameter since the cross-section is circular. In case the shaft 54 has a cross-sectional shape other than circular, the cross-sectional dimension d_{S} is determined as the largest cross-sectional dimension passing through a geometrical centre of the cross section of the shaft 54.

The shaft comprises a distal end region 64, which is located adjacent to the head 56. The end region 64 has a length x, which is determined in the third direction D₃ of the shaft 54. The length x corresponds to how deep the attachment portion 44 may be inserted into the receptacle 58, 60 and 0 < x ≤ 20 mm, preferably 2 mum ≤ x ≤ 15 mm, more preferably 4 mm ≤ x ≤ 10 mm. The cross-sectional dimension d_{S} of the shaft 54 is determined outside the end region 64.

The shaft 54 comprises at least one protrusion located at the circumference of the shaft 54 in the end region 64. In the illustrated example, there are two protrusions 66, 68 located at radially opposite locations of the shaft 54. The protrusions 66, 68 have a height h, which is determined in the third direction D₃ of the shaft 54. In the illustrated embodiment the height h is less than the length x of the end region 64, however it is feasible that the height h is equal to or greater than the length x of the end region 64.

The end region 64 has a first cross-sectional dimension d₁, which is determined as the smallest cross-sectional dimension passing through the geometrical centre C of the cross section of the shaft 54 within the end region 64. In case the end region 64 has a circular cross-sectional shape the first cross-sectional dimension d₁ is the diameter.

A cross-section of the shaft 54 adjacent to the head 56 in the end region 64 may intersect the two protrusions 66, 68. The cross-section through the two protrusions 66, 68 has a cross-sectional dimension d₂, which is larger than the rest of the shaft 54. A second cross-sectional dimension d₂ is determined as the largest cross-sectional dimension passing through the geometrical centre C of the cross section of the shaft 54. The second cross-sectional dimension d₂ is larger than the first cross-sectional dimension d₁. Further, both the first cross-sectional dimension d₁ and the second cross-sectional dimension d₂ are smaller than the cross-sectional dimension d_{H} of the head 56.

In the illustrated example the first cross-sectional dimension d₁ is the same as the cross-section d_{S} of the shaft 54. The first cross-sectional dimension d₁ may be determined in the end region 64 more proximal to the central region 50 than the two protrusions 66, 68 or it may be determined in the same cross-section as the second cross-sectional dimension d₂ but outside of the protrusions 66, 68. See Figure 3.

In case the end region 64 has a cross-sectional shape other than circular, the first and cross-sectional dimensions are determined as the respective smallest and the largest cross-sectional dimension passing through the geometrical centre C of a cross section of the end region 64.

As may be gleaned from the cross-sectional view of the attachment element 38, 40 in Figure 3, the cross-section is symmetric in relation to a first symmetry plane A1 of the cross-section. In the illustrated embodiment, the symmetry plane A1 is a plane spanned by the first leg 46, the second leg 48 and the shaft 54. Both the protrusions 66, 68 are symmetric in relation to the first symmetry plane A1. Also the rest of the attachment portion 44 and the holding portion 42 are symmetric in relation to the first symmetry plane A1. See Figure 2. Thereby, there the attachment element 38, 40 will look the same at both the left-hand side of the interior 10 of the vehicle 12 and the right-hand side of the interior 10 of the vehicle 12. Hence the same kind of attachment element 38, 40 may be used at both upper corners 24, 26 of the cargo protection device 20.

The cross-section is also symmetric in relation to a second symmetry plane A2, in the illustrated embodiment substantially coinciding with the longitudinal direction of the vehicle, when the attachment element 38, 40 has a position as mounted in the vehicle interior. The second symmetry plane A2 is perpendicular to the first symmetry plane A1. In the first embodiment, this symmetry is obtained by the two protrusions 66, 68 having corresponding shapes and being at radially opposite locations of the shaft 54, with one upper 66 and one lower protrusion 68. See Figure 3. Also the rest of the attachment portion 44 is symmetric in relation to the second symmetry plane A2. Further, the first leg 46 and the second leg 48 of the holding portion 42 have corresponding shapes, such that the whole attachment element 38, 40 is symmetric in relation to the second symmetry plane A2. Thereby, there the attachment element 38, 40 would look the same also when interchanging the positions of the first leg 46 and the second leg 48.

Since the attachment element 38, 40 is symmetric both in relation to the first symmetry plane A1 and in relation to the second symmetry plane A2, there is no risk of mounting the attachment element 38, 40 at a wrong upper corner 24, 26 or with the attachment portion 44 upside down.

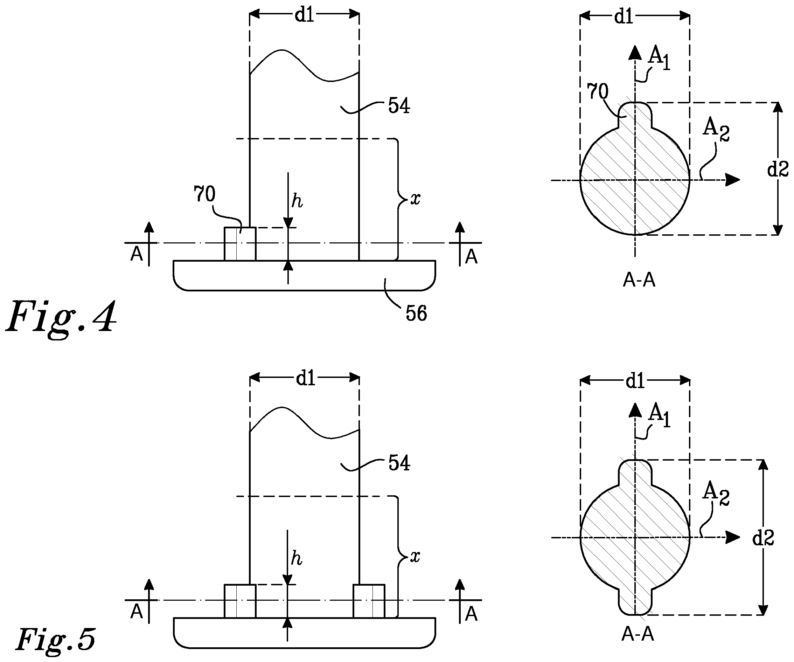

Figures 4-9 illustrate a plurality of alternative configurations of the end region of attachment elements as seen in lateral and longitudinal cross-sectional views.

Figure 4 illustrates a second embodiment of the attachment element with only one protrusion 70 having a height h, which, similar as for the embodiment of Figure 2, may be less than, equal to or greater than the length x of the end region 64. The first cross-sectional dimension d₁ and the second cross-sectional dimension d₂ are determined in a way corresponding to the way explained in conjunction with Figures 2 and 3. The second cross-sectional dimension d₂ goes through the protrusion 70.

Figure 5 illustrates a third embodiment of the attachment element with two protrusions similar as for the embodiment of Figure 2. The heights of the two protrusions may differ or be the same. The first cross-sectional dimension d₁ and the second cross-sectional dimension d₂ are determined in a way corresponding to the way explained in conjunction with Figures 2 and 3.

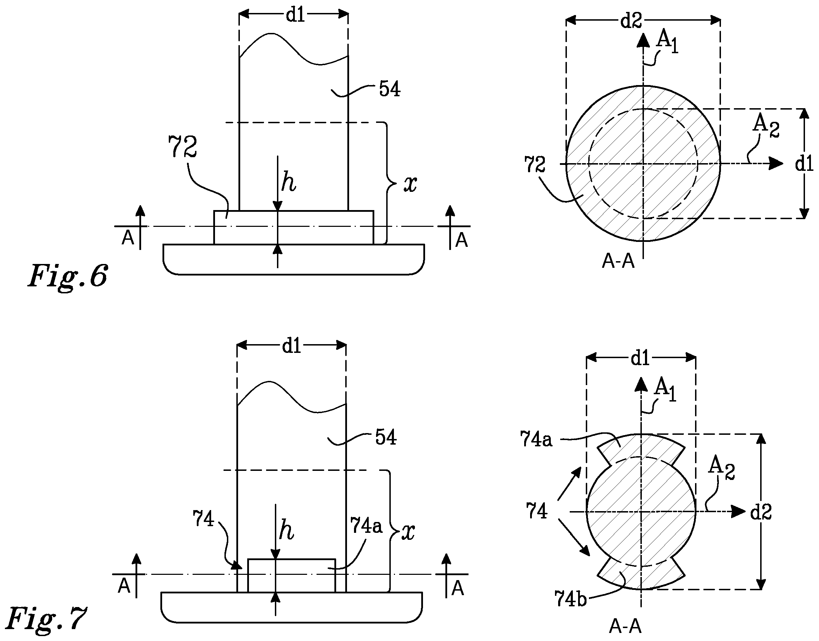

Figure 6 illustrates a fourth embodiment of the attachment element, wherein the protrusion forms a collar 72 going all the way around the shaft 54. The collar 72 defines the second cross-sectional dimension d₂, while the diameter of the shaft 54 in the end region 64 above the collar 72 defines the first cross-sectional dimension d₁.

Figure 7 illustrates a fifth embodiment of the attachment element combining elements from Figures 5 and 6, wherein the collar 74 goes only partly around the shaft 54 and forms two protrusions 74a, 74b. The first cross-sectional dimension d₁ and the second cross-sectional dimension d₂ are determined in a way corresponding to the way explained in conjunction with Figures 2 and 3.

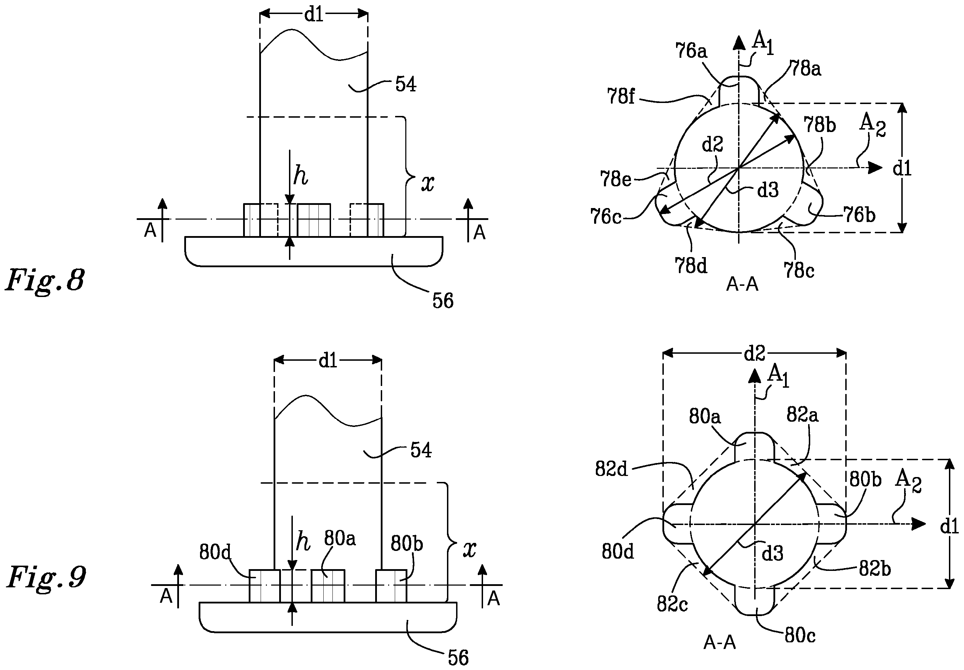

Figure 8 illustrates a sixth embodiment of the attachment element with three protrusions 76a, 76b, 76c. Similar as for Figure 4, the second cross-sectional dimension d₂ intersects with one of the protrusions 76a, 76b, 76c. However, for this embodiment the first cross-sectional dimension d₁ is not found in the same plane as the second cross-sectional dimension d₂, Instead the first cross-sectional dimension d₁ is determined above the protrusions 76a, 76b, 76c, similar as for the embodiment of Figure 6, i.e. it coincides with the diameter of the shaft 54.

When looking at the plane of the second cross-sectional dimension d₂, the smallest cross-sectional dimension of this plane, a third cross-sectional dimension d₃, would be drawn between support lines 78a-f going between the protrusions 76a, 76b, 76c and the contour of the shaft 54. The third cross-sectional dimension d₃ is larger than the first cross-sectional dimension d₁ but smaller than the second cross-sectional dimension d₂.

Figure 9 illustrates a seventh embodiment of the attachment element with four protrusions 80a-d. Similar as for Figures 3 and 5, the second cross-sectional dimension d₂ intersects with two of the protrusions 80a-d. However, similar as for Figure 8, the first cross-sectional dimension d₁ is not found in the same plane as the second cross-sectional dimension d₂. Instead the first cross-sectional dimension d₁ is determined above the protrusions 80a-d. When looking at the plane of the second cross-sectional dimension d₂, the smallest cross-sectional dimension of this plane, i.e. the third cross-sectional dimension d₃, would be drawn between support lines 82a-d going between the protrusions 80a-d and the contour of the shaft 54.

All of the illustrated embodiments, i.e. the first to the seventh embodiments, have the above-mentioned symmetry in relation to the first symmetry plane A1 making it feasible to utilize the same kind of attachment element at both upper corners of the cargo protection device.

The first, third, fourth, fifth and seventh embodiments have the above-mentioned symmetry in relation to the second symmetry plane A2 making it feasible to mount the attachment element as illustrated in Figures 3, 5-7 and 9 or when interchanging the legs 46,48.

Figure 10 is a detailed view of one of the receptacles 58, 60. It comprises an entering portion 84, a waist portion 86 and a locking portion 88. The waist portion 86 is located between the entering portion 84 and the locking portion 88. The receptacle 58, 60 has a closed circumference. Therefore the attachment element 38, 40 is entered from the lateral side, when attaching the cargo protection device 14 in the interior 10 of the vehicle 12.

The entering portion 84 comprises a shape and a cross-sectional dimension d_{E} adapted to receive the head 56 of the attachment element 38, 40. The entering portion 84 is larger than the head 56, such that the head 56 can enter the receptacle 58. The entering portion 84 may have a corresponding shape to that of the head 56.

The waist portion 86 has a cross-sectional dimension d_{W}, which is less than the cross-sectional dimension d_{E} of the entering portion. The cross-sectional dimension d_{W} of the waist portion 86 is less than the second cross-sectional dimension d₂ of the shaft 54 of the attachment element 38, 40 but larger than the first cross-sectional dimension d₁ of the shaft 54, such that the shaft 54 can pass the waist portion 86 at its first first cross-sectional dimension d₁ but not at the second cross-sectional dimension d₂.

The locking portion 88 has a cross-sectional dimension d_{L}, which is larger than the cross-sectional dimension d_{w} of the waist portion 86 but less than the cross-sectional dimension d_{E} of the entering portion 84. The cross-sectional dimension d_{L} of the locking portion 88 is larger than the first cross-sectional dimension d₁ of the shaft 54 of the attachment element 38, 40 but less than the cross-sectional dimension d_{H} of the head. Thereby the head 56 of the attachment element 38, 40 will stay in the locking portion 88, such that the attachment element 38, 40 is retained in the receptacle 58. Preferably, the cross-sectional dimension d_{L} of the locking portion 88 is larger than the second cross-sectional dimension d₂ of the shaft 54 of the attachment element 38, 40 as well, such that the attachment element 38, 40 will abut with its head 56 against an inner surface of the receptacle 58 when the attachment element 38, 40 is retained by the receptacle 58.

The receptacle 58 comprises a cavity 90 for receiving the head 56 of the attachment element 38, 40. The depth d_{Z} of the cavity 90 is adapted such that it can contain the head 56 and at least a portion of the end portion 64 of the shaft 54 of the attachment element 38, 40, and preferably the whole end portion 64. The attachment element 38, 40 can be entered at least so far into the cavity 90, such that the attachment element 38, 40 can be passed through the waist portion 86 at the first cross-sectional dimension d₁ of the shaft 54.

The centre of the waist portion 86 is located at a higher vertical position than the centre of the entering portion 84, when mounted in the vehicle interior. Thereby a displacement performed against gravity and/or against the tensioning force of the cargo protection device 14 is needed to move the attachment element 38, 40 from the entering portion 84 into the waist portion 86, when attaching the attachment element 38, 40 to the receptacle 58. Correspondingly, a displacement against the gravity and/or tensioning force is needed to move the attachment element 38, 40 from the locking portion 88 into the waist portion 86, when detaching the attachment element 38, 40 from the receptacle 58.

An attachment arrangement 92, 94 according to the invention, see Figure 1, comprises an attachment element 38, 40 as described herein and a receptacle 58, 60 as described herein.

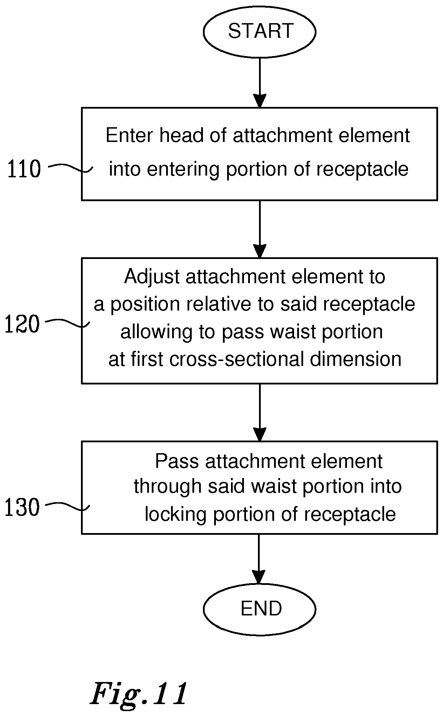

Figure 11 illustrates a method according to the invention for attaching an attachment element 38, 40 as disclosed herein or a cargo protection device 14 as disclosed herein to the interior 10 of the vehicle 12, in case the vehicle 12 comprises a receptacle 58, 60 as disclosed herein. The method comprises:
110. Entering the head 56 of the shaft 54 of the attachment element 38, 40 through the entering portion 84 of the receptacle 58, 60.
120. Adjusting the attachment element 38, 40 to a position relative to the receptacle 58,
60 allowing the shaft 54 to pass the waist portion 86 at the first cross-sectional dimension d₁.
130. Passing the attachment element 38, 40 through the waist portion 86 of the receptacle 58, 60 into the locking portion 88 of the receptacle 58, 60.

In step 110, the head 56 is entered into the receptacle 58, 60, i.e. into the cavity 90 of the receptacle 58, 60. In steps 120 and 130, the head 56 is located inside the receptacle 58, 60, i.e. within the cavity 90 of the receptacle 58, 60.

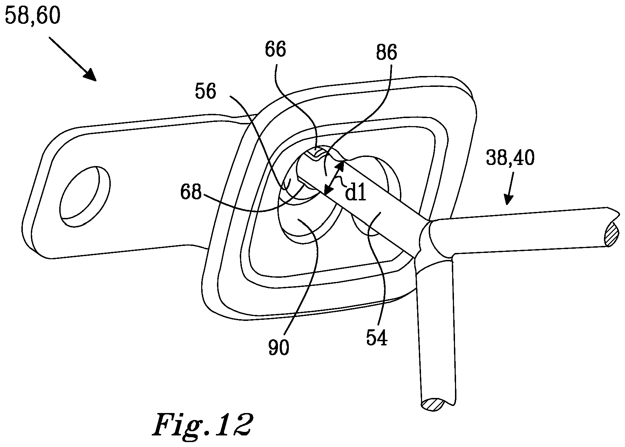

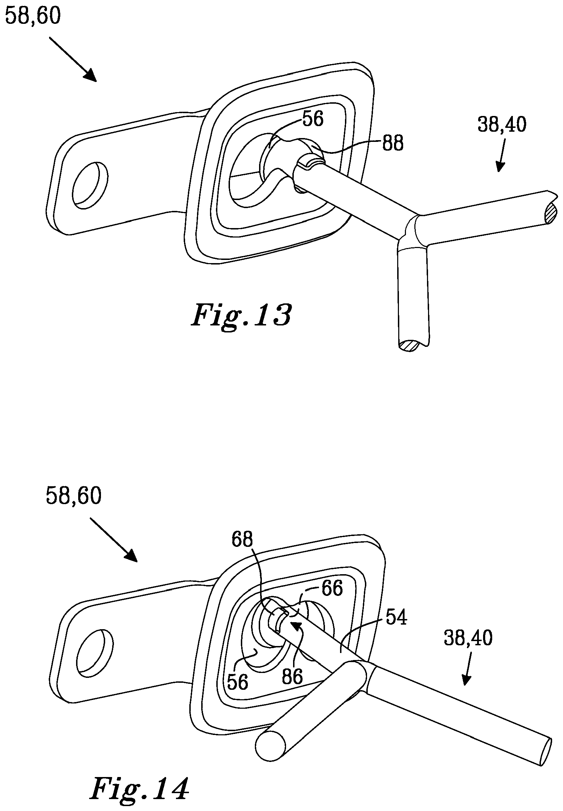

In step 120 the attachment element 38, 40 may be adjusted by pushing it further into the cavity 90 of the receptacle 58, 60, such that the shaft 54 can pass the waist portion 86 at the first cross-sectional dimension d₁. See Figure 12. The protrusions 66, 68 are then pushed into the cavity 90, such that they are out of the way in relation to the waist portion 86, and the shaft 54 can be passed through the waist portion 86 at the first cross-sectional dimension d₁. When the head 56 has reached the locking portion 88, the push-in force is released and the attachment element 38, 40 will go back to its normal relative position, as is illustrated in Figure 13, due to gravity and/or the tensioning force of the cargo protection device 14, allowing the cargo protection device 14 to hang in a substantially vertical direction.

As an alternative to, or a complement to, pushing-in the attachment element 38, 40, the attachment element 38, 40 may be adjusted by rotating it, such that the shaft 54 can pass the waist portion 86 at the first cross-sectional dimension d₁. See Figure 14. The protrusions 66, 68 are then rotated out of the way, such that the shaft 54 can pass the waist portion 86 at the first cross-sectional dimension d₁. When the head 56 has reached the locking portion 88, the rotation is released and the attachment element 38, 40 will go back to its normal relative position, illustrated in Figure 13, due to gravity and/or the tensioning force of the cargo protection device 14, allowing the cargo protection device 14 to hang in a substantially vertical direction.

For some embodiments of the attachment element according to the invention only one of the adjustment methods, to rotate or to push in, may be required or feasible. Purely as an example, for an attachment element having a collar 72, like the embodiment of Figure 6, the attachment element should be pushed in to be passed through the waist region 86. Purely as another example, if the height h of the protrusions is equal to or greater than the length x of the end region 64, the attachment element should be rotated to pass the waist region 86 with its head 56 being in the receptacle 58, 60. For other embodiments, like the ones of Figures 2-5 or Fig. 7, both push-in and rotation to pass the waist region 86 would work.

If utilizing an of attachment element having a third cross-sectional dimension d₃, e.g. with three protrusions 76a, 76b, 76c like in Figure 8 or with four protrusions 80a-d like in Figure 9, the waist portion 86 may have a cross-sectional dimension d_{W}, such that the shaft 54 may pass either at the third cross-sectional dimension d₃ or at the first cross-sectional dimension d₁. In that case, both push-in and rotation as described would work. Alternatively the cross-sectional dimension d_{W} of the waist portion 86 may be adapted to only let the shaft 54 through at the first cross-sectional dimension d₁. In that case, the attachment element should be pushed in to be passed through the waist region 86.

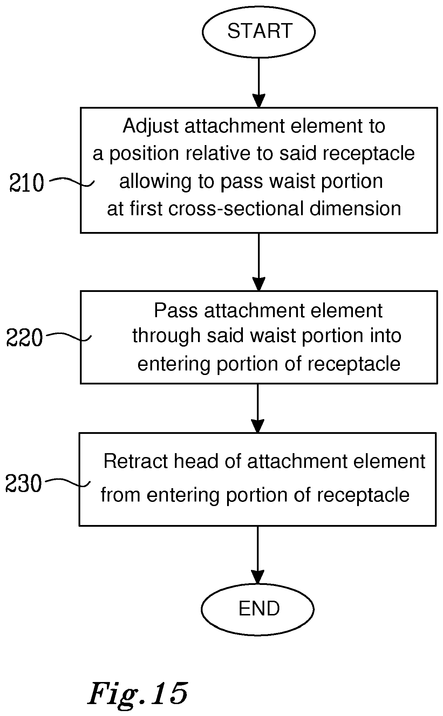

Figure 15 illustrates a method according to the invention for detaching an attachment element 38, 40 as disclosed herein or a cargo protection device 14 as disclosed herein from the interior 10 of the vehicle 12, in case the vehicle 12 comprises a receptacle 58, 60 as disclosed herein. The method comprises:
210. Adjusting the attachment element 38, 40 to a position relative to the receptacle 58,
60 allowing the shaft 54 to pass the waist portion 86 at the first cross-sectional dimension d₁.
220. Passing the attachment element 38, 40 through the waist portion 86 of the receptacle 58, 60 into the entering portion 84 of the receptacle 58, 60.
230. Retracting the head 56 of the shaft 54 of the attachment element 38, 40 from the entering portion 84 of the receptacle 58, 60.

The adjustment may be performed by pushing in or rotation of the attachment element 38, 40 in a corresponding way as described above for the method for attaching the attachment element 38, 40.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An attachment element (38, 40) for attachment of a cargo protection device (14) to an interior (10) of a vehicle (12), said attachment element (38, 40) comprising
- a holding portion (42), adapted to be located at least partly in or at a corner (24, 26) of said cargo protection device (14), which corner is intended to be at an upper position in a vertical direction, when said cargo protection device (14) is mounted in the vehicle (12),
- an attachment portion (44), for attachment of said attachment element (38, 40) to said interior (10) of said vehicle (12), said attachment portion (44) comprising a shaft (54) and a head (56) located at a distal end of said shaft (54), said head (56) having a cross-sectional dimension (d_{H}) being larger than a cross-sectional dimension of said shaft (54),
a distal end region (64) of said shaft (54) having a length (x) corresponding to how deep said attachment portion (44) is insertable into an receptacle (58, 60),
**characterized in that**
said distal end region (64) of said shaft (54) comprises at least a first cross-sectional dimension (d₁), which is less than a second cross-sectional dimension (d₂) of said end region (64),
said cross-sectional dimension (d_{H}) of said head (56) being larger than said first (d₁) and second (d₂) cross-sectional dimensions.

2. The attachment element (38, 40) according to claim 1, wherein said second cross-sectional dimension (d₂) is located closer to said head (56) than said first cross-sectional dimension (d₁).

3. The attachment element (38, 40) according to claim 1 or 2, wherein said first (d₁) and second (d₂) cross-sectional dimensions are located at different positions around the circumference of said shaft (54).

4. The attachment element (38, 40) according to any one of the preceding claims, wherein said shaft (54) comprises at least one protrusion (66, 68, 70, 72, 74a-b, 76a-c, 80a-d) located at the circumference of said shaft (54), said second cross-sectional dimension (d₂) intersecting said at least one protrusion (66, 68, 70, 72, 74a-b, 76a-c, 80a-d).

5. The attachment element (38, 40) according to any one of the preceding claims,
wherein said holding portion (42) comprises a first leg (46) and a second leg (48), said first leg (46) being adapted to extend in a first direction (D₁) substantially parallel to a first edge (21 a) of said cargo protection device (14) and said second leg (48) being adapted to extend in a second direction (D₂) substantially parallel to a second edge (21 b, 21 d) of said cargo protection device (14),
said shaft (54) of said attachment portion (44) being adapted to extend in a third direction (D₃), which third direction (D₃) has a first component in a direction opposite to said first direction (D₁) and a second component in a direction opposite to said second direction (D₂).

6. The attachment element (38, 40) according to any one of the preceding claims, wherein said attachment element (38, 40) is symmetric in relation to a first symmetry plane (A1) and/or symmetric in relation to a second symmetry plane (A2), said first and second symmetry planes (A1, A2) being perpendicular, said first symmetry plane (A1) being a plane spanned by said attachment element (38, 40), said second symmetry plane (A2) being determined as substantially coinciding with a longitudinal direction of said vehicle (12), when the attachment element (38, 40) has a position as mounted in said interior (10) of said vehicle (12).

7. An attachment arrangement (92, 94) comprising an attachment element (38, 40) according to any one of claims 1-6 and a receptacle (58, 60),
said receptacle (58, 60) comprising
- an entering portion (84) having a shape and a cross-sectional dimension (d_{E}) adapted to receive a head (56) of said attachment element (38, 40),
- a waist portion (86) having a cross-sectional dimension (d_{W}), which is less than said cross-sectional dimension (d_{E}) of said entering portion (84), and
- a locking portion (88) having a cross-sectional dimension (d_{L}), which is larger than said cross-sectional dimension (d_{w}) of said waist portion (86) but less than said cross-sectional dimension (d_{E}) of said entering portion (84),
said waist portion (86) being located between said entering portion (84) and said locking portion (88),
- said shape and said cross-sectional dimension (d_{E}) of said entering portion (84) of said receptacle (58, 60) being adapted to receive said head (56) of said attachment element (38, 40),
- said cross-sectional dimension (dw) of said waist portion (86) being less than said second cross-sectional dimension (d₂) of said shaft (54) but larger than said first cross-sectional dimension (d₁) of said shaft (54), and
- said cross-sectional dimension (d_{L}) of said locking portion (88) being larger than said first cross-sectional dimension (d₁) of said shaft (54) but less than said cross-sectional dimension (d_{H}) of said head (56).

8. The attachment arrangement (92, 94) according to claim 7, wherein said cross-sectional dimension (d_{L}) of said locking portion (88) of said receptacle (58, 60) is larger than said second cross-sectional dimension (d₂) of said shaft (54) of said attachment element but less than said cross-sectional dimension (d_{H}) of said head (56).

9. The attachment arrangement (92, 94) according to claim 7 or 8, wherein said receptacle (58, 60) has a depth (d_{Z}) configured to allow said attachment element (38, 40) to be pushed a distance into said entering portion (84) of said receptacle (58, 60), said distance allowing both of said first (d₁) and second (d₂) cross-sectional dimensions of said attachment element (38, 40) to be located inside said receptacle (58, 60).

10. The attachment arrangement (92, 94) according to any one of claims 7-9, wherein said waist portion (86) of said receptacle (58, 60) is located at a higher position in said vertical direction than said entering portion (84) and/or locking portion (88), when said receptacle (58, 60) is oriented as when mounted in an interior (10) of a vehicle (12).

11. A cargo protection device (14) having two corners (24, 26) intended to be at an upper position in a vertical direction, when said cargo protection device (14) is mounted in a vehicle (12), said cargo protection device (14) comprising
- a foldable and/or rollable fabric portion (20), and
- at least one attachment element (38, 40) according to any one of claims 1-6 located in or at one or more of said corners (24, 26).

12. The cargo protection device (14) according to claim 11, wherein said fabric portion (20) comprises an edge trim (22), said edge trim (22) also being foldable and/or rollable, said edge trim (22) being formed in one part and enclosing at least 50%, preferably at least 70%, more preferably at least 90%, most preferably substantially all of a circumference of said fabric portion (20).

13. A vehicle (12) comprising an attachment arrangement (92, 94) according to any one of claims 7-10 and/or a cargo protection device (14) according to any one of claims 11-12.

14. A method for attaching an attachment element (38, 40) according to any one of claims 1-6 or a cargo protection device (14) according to any one of claims 11-12 to an interior (10) of a vehicle (12), said vehicle comprising a receptacle (58, 60), said method comprising
110: Entering said head (56) of said shaft (54) of said attachment element (38, 40) through said entering portion (84) of said receptacle (58, 60),
120: Adjusting said attachment element (38, 40) to a position relative to said receptacle (58, 60) allowing said shaft (54) to pass said waist portion (86) at said first cross-sectional dimension (d₁),
130: Passing said attachment element (38, 40) through said waist portion (86) of said receptacle (58, 60) into said locking portion (88) of said receptacle (58, 60).

15. The method according to claim 14, wherein said attachment element (38, 40) is adjusted by pushing it into said receptacle (58, 60) and/or by rotating it in order to position said shaft (54) to pass said waist portion (86) at said first cross-sectional dimension (d₁).

## Patentansprüche

1. Befestigungselement (38, 40) zur Befestigung einer Frachtschutzvorrichtung (14) in einem Innenbereich (10) eines Fahrzeugs (12), wobei das Befestigungselement (38, 40) Folgendes umfasst:
- einen Halteabschnitt (42), der geeignet ist, wenigstens zum Teil in oder an einer Ecke (24, 26) der Frachtschutzvorrichtung (14) angeordnet zu sein, wobei die Ecke dazu vorgesehen ist, sich in einer oberen Position in vertikaler Richtung zu befinden, wenn die Frachtschutzvorrichtung (14) in dem Fahrzeug (12) montiert ist,
- einen Befestigungsabschnitt (44) zur Befestigung des Befestigungselements (38, 40) in dem Innenbereich (10) des Fahrzeugs (12), wobei der Befestigungsabschnitt (44) einen Schaft (54) und einen Kopf (56) umfasst, der an einem entfernten Ende des Schafts (54) gelegen ist, wobei der Kopf (56) eine Querschnittsabmessung (d_{H}) aufweist, die größer als eine Querschnittsabmessung des Schafts (54) ist,
wobei ein entfernter Endbereich (64) des Schafts (54) eine Länge (x) aufweist, die der Tiefe entspricht, bis zu der der Befestigungsabschnitt (44) in eine Aufnahme (58, 60) einsetzbar ist,
**dadurch gekennzeichnet, dass**
der entfernte Endbereich (64) des Schafts (54) wenigstens eine erste Querschnittsabmessung (d₁) umfasst, die kleiner als eine zweite Querschnittsabmessung (d₂) des Endbereichs (64) ist,
wobei die Querschnittsabmessung (d_{H}) des Kopfs (56) größer als die erste (d₁) und die zweite (d₂) Querschnittsabmessung ist.

2. Befestigungselement (38, 40) nach Anspruch 1, wobei die zweite Querschnittsabmessung (d₂) näher an dem Kopf (56) als die erste Querschnittsabmessung (d₁) gelegen ist.

3. Befestigungselement (38, 40) nach Anspruch 1 oder 2, wobei die erste (d₁) und die zweite (d₂) Querschnittsabmessung an unterschiedlichen Positionen entlang dem Umfang des Schafts (54) gelegen sind.

4. Befestigungselement (38, 40) nach einem der vorhergehenden Ansprüche, wobei der Schaft (54) wenigstens einen Vorsprung (66, 68, 70, 72, 74a-b, 76a-c, 80a-d) umfasst, der an dem Umfang des Schafts (54) gelegen ist, wobei die zweite Querschnittsabmessung (d₂) den wenigstens einen Vorsprung (66, 68, 70, 72, 74a-b, 76a-c, 80a-d) schneidet.

5. Befestigungselement (38, 40) nach einem der vorhergehenden Ansprüche, wobei der Halteabschnitt (42) einen ersten Schenkel (46) und einen zweiten Schenkel (48) umfasst, wobei der erste Schenkel (46) geeignet ist, sich in eine erste Richtung (D₁) zu erstrecken, die im Wesentlichen parallel zu einer ersten Kante (21a) der Frachtschutzvorrichtung (14) verläuft, und der zweite Schenkel (48) geeignet ist, sich in eine zweite Richtung (D₂) zu erstrecken, die im Wesentlichen parallel zu einer zweiten Kante (21b, 21d) der Frachtschutzvorrichtung (14) verläuft, wobei der Schaft (54) des Befestigungsabschnitts (44) geeignet ist, sich in eine dritte Richtung (D₃) zu erstrecken, wobei die dritte Richtung (D₃) eine erste Komponente in einer entgegengesetzt zu der ersten Richtung (D₁) verlaufenden Richtung und eine zweite Komponente in einer entgegengesetzt zu der zweiten Richtung (D₂) verlaufenden Richtung aufweist.

6. Befestigungselement (38, 40) nach einem der vorhergehenden Ansprüche, wobei das Befestigungselement (38, 40) in Bezug auf eine erste Symmetrieebene (A1) symmetrisch ist und/oder in Bezug auf eine zweite Symmetrieebene (A2) symmetrisch ist, wobei die erste und die zweite Symmetrieebene (A1, A2) rechtwinklig zueinander sind, wobei es sich bei der ersten Symmetrieebene (A1) um eine Ebene handelt, die von dem Befestigungselement (38, 40) aufgespannt ist, wobei für die zweite Symmetrieebene (A2) bestimmt wird, dass sie im Wesentlichen mit einer Längsrichtung des Fahrzeugs (12) zusammenfällt, wenn das Befestigungselement (38, 40) eine Position aufweist, die der in dem Innenbereich (10) des Fahrzeugs (12) montierten Position entspricht.

7. Befestigungsanordnung (92, 94), die ein Befestigungselement (38, 40) nach einem der Ansprüche 1 bis 6 und eine Aufnahme (58, 60) umfasst,
wobei die Aufnahme (58, 60) Folgendes umfasst:
- einen Eintrittsabschnitt (84), der eine Form und eine Querschnittsabmessung (d_{E}) aufweist, die geeignet sind, einen Kopf (56) des Befestigungselements (38, 40) aufzunehmen,
- einen Einschnürungsabschnitt (86), der eine Querschnittsabmessung (d_{W}) aufweist, die kleiner als die Querschnittsabmessung (d_{E}) des Eintrittsabschnitts (84) ist, und
- einen Verschlussabschnitt (88), der eine Querschnittsabmessung (d_{L}) aufweist, die größer als die Querschnittsabmessung (d_{W}) des Einschnürungsabschnitts (86), aber kleiner als die Querschnittsabmessung (d_{E}) des Eintrittsabschnitts (84) ist,
wobei der Einschnürungsabschnitt (86) zwischen dem Eintrittsabschnitt (84) und dem Verschlussabschnitt (88) gelegen ist,
- wobei die Form und die Querschnittsabmessung (d_{E}) des Eintrittsabschnitts (84) der Aufnahme (58, 60) geeignet sind, den Kopf (56) des Befestigungselements (38, 40) aufzunehmen,
- wobei die Querschnittsabmessung (d_{W}) des Einschnürungsabschnitts (86) kleiner als die zweite Querschnittsabmessung (d₂) des Schafts (54), aber größer als die erste Querschnittsabmessung (d₁) des Schafts (54) ist, und
- wobei die Querschnittsabmessung (d_{L}) des Verschlussabschnitts (88) größer als die erste Querschnittsabmessung (d₁) des Schafts (54), aber kleiner als die Querschnittsabmessung (d_{H}) des Kopfs (56) ist.

8. Befestigungsanordnung (92, 94) nach Anspruch 7, wobei die Querschnittsabmessung (d_{L}) des Verschlussabschnitts (88) der Aufnahme (58, 60) größer als die zweite Querschnittsabmessung (d₂) des Schafts (54) des Befestigungselements, aber kleiner als die Querschnittsabmessung (d_{H}) des Kopfs (56) ist.

9. Befestigungsanordnung (92, 94) nach Anspruch 7 oder 8, wobei die Aufnahme (58, 60) eine Tiefe (d_{Z}) aufweist, die dazu ausgelegt ist, zu ermöglichen, dass das Befestigungselement (38, 40) um einen Abstand in den Eintrittsabschnitt (84) der Aufnahme (58, 60) gedrückt wird, wobei der Abstand ermöglicht, dass sowohl die erste (d₁) als auch die zweite (d₂) Querschnittsabmessung des Befestigungselements (38, 40) innerhalb der Aufnahme (58, 60) gelegen sind.

10. Befestigungsanordnung (92, 94) nach einem der Ansprüche 7 bis 9, wobei der Einschnürungsabschnitt (86) der Aufnahme (58, 60) an einer höheren Position in der vertikalen Richtung als der Eintrittsabschnitt (84) und/oder der Verschlussabschnitt (88) gelegen ist, wenn die Aufnahme (58, 60) so ausgerichtet ist, wie wenn sie in einem Innenbereich (10) eines Fahrzeugs (12) montiert ist.

11. Frachtschutzvorrichtung (14), die zwei Ecken (24, 26) aufweist, die dazu vorgesehen sind, an einer oberen Position in vertikaler Richtung gelegen zu sein, wenn die Frachtschutzvorrichtung (14) in einem Fahrzeug (12) montiert ist, wobei die Frachtschutzvorrichtung (14) Folgendes umfasst:
- einen faltbaren und/oder aufrollbaren Gewebeabschnitt (20) und
- wenigstens ein Befestigungselement (38, 40) nach einem der Ansprüche 1 bis 6, das in einer oder mehreren der Ecken (24, 26) gelegen ist.

12. Frachtschutzvorrichtung (14) nach Anspruch 11, wobei der Gewebeabschnitt (20) einen Randstreifen (22) umfasst, wobei der Randstreifen (22) ebenfalls faltbar und/oder aufrollbar ist, wobei der Randstreifen (22) einstückig ausgebildet ist und wenigstens 50 Prozent, vorzugsweise wenigstens 70 Prozent, insbesondere wenigstens 90 Prozent, besonders bevorzugt im Wesentlichen die Gesamtheit eines Umfangs des Gewebeabschnitts (20) umschließt.

13. Fahrzeug (12), das eine Befestigungsanordnung (92, 94) nach einem der Ansprüche 7 bis 10 und/oder eine Frachtschutzvorrichtung (14) nach einem der Ansprüche 11 bis 12 umfasst.

14. Verfahren zur Befestigung eines Befestigungselements (38, 40) nach einem der Ansprüche 1 bis 6 oder einer Frachtschutzvorrichtung (14) nach einem der Ansprüche 11 bis 12 in einem Innenbereich (10) eines Fahrzeugs (12), wobei das Fahrzeug eine Aufnahme (58, 60) umfasst, wobei das Verfahren Folgendes umfasst:
110: Eintreten des Kopfs (56) des Schafts (54) des Befestigungselements (38, 40) durch den Eintrittsabschnitt (84) der Aufnahme (58, 60),
120: Einstellen des Befestigungselements (38, 40) auf eine Position relativ zu der Aufnahme (58, 60), die es ermöglicht, dass der Schaft (54) den Einschnürungsabschnitt (86) bei der ersten Querschnittsabmessung (d₁) passiert,
130: Führen des Befestigungselements (38, 40) durch den Einschnürungsabschnitt (86) der Aufnahme (58, 60) in den Verschlussabschnitt (88) der Aufnahme (58, 60).

15. Verfahren nach Anspruch 14, wobei das Befestigungselement (38, 40) eingestellt wird, indem es in die Aufnahme (58, 60) gedrückt und/oder gedreht wird, um den Schaft (54) so zu positionieren, dass er den Einschnürungsabschnitt (86) bei der ersten Querschnittsabmessung (d₁) passiert.

## Revendications

1. Élément de fixation (38, 40) pour fixer un dispositif (14) de protection de chargement à l'intérieur (10) d'un véhicule (12), ledit élément de fixation (38, 40) comprenant :
- une partie de maintien (42), conçue pour être située au moins partiellement dans ou au niveau d'un coin (24, 26) dudit dispositif (14) de protection de chargement, lequel coin est destiné à être dans une position supérieure dans la direction verticale, quand ledit dispositif (14) de protection de chargement est monté dans le véhicule (12),
- une partie de fixation (44) pour fixer ledit élément de fixation (38, 40) audit intérieur (10) dudit véhicule (12), ladite partie de fixation (44) comprenant un axe (54) et une tête (56) située à l'extrémité distale dudit axe (54), ladite tête (56) ayant une dimension transversale (d_{H}) qui est supérieure à la dimension transversale dudit axe (54),
une zone terminale distale (64) dudit axe (54) ayant une longueur (x) correspondant à la profondeur à laquelle on peut introduire ladite partie de fixation (44) dans un socle de fixation (58, 60),
**caractérisé en ce que** :
ladite zone terminale distale (64) dudit axe (54) comprend au moins une première dimension transversale (d₁), qui est inférieure à une seconde dimension transversale (d₂) de ladite zone terminale (64),
ladite dimension transversale (d_{H}) de ladite tête (56) est supérieure auxdites première (d₁) et seconde (d₂) dimensions transversales.

2. Élément de fixation (38, 40) selon la revendication 1, dans lequel la seconde dimension transversale (d₂) est située plus près de ladite tête (56) que la première dimension transversale (d₁).

3. Élément de fixation (38, 40) selon la revendication 1 ou 2, dans lequel lesdites première (d₁) et seconde (d₂) dimensions transversales sont situées en des positions différentes autour de la circonférence dudit axe (54).

4. Élément de fixation (38, 40) selon l'une quelconque des revendications précédentes, dans lequel ledit axe (54) comprend au moins une saillie (66, 68, 70, 72, 74a-b, 76a-c, 80a-d) située à la circonférence dudit axe (54), la seconde dimension transversale (d₂) coupant au moins une saillie (66, 68, 70, 72, 74a-b, 76a-c, 80ad).

5. Élément de fixation (38, 40) selon l'une quelconque des revendications précédentes, dans lequel ladite partie de maintien (42) comprend une première branche (46) et une seconde branche (48), ladite première branche (46) étant apte à s'étendre dans une première direction (D₁) sensiblement parallèle à un premier bord (21a) dudit dispositif (14) de protection de chargement et ladite seconde branche (48) étant apte à s'étendre dans une deuxième direction (D₂) sensiblement parallèle à un second bord (21b, 21d) dudit dispositif (14) de protection de chargement, ledit axe (54) de ladite partie de fixation (44) étant apte à s'étendre dans une troisième direction (D₃), ladite troisième direction (D₃) comporte une première composante dans une direction opposée à ladite première direction (D₁) et une seconde composante dans une direction opposée à ladite deuxième direction (D₂).

6. Élément de fixation (38, 40) selon l'une quelconque des revendications précédentes, dans lequel ledit élément de fixation (38, 40) est symétrique par rapport à un premier plan de symétrie (A1) et/ou symétrique par rapport à un second plan de symétrie (A2), lesdits premier et second plans de symétrie (A1, A2) étant perpendiculaires, ledit premier plan de symétrie (A1) étant un plan traversé par ledit élément de fixation (38, 40), ledit second plan de symétrie (A2) étant défini comme coïncidant sensiblement avec la direction longitudinale dudit véhicule (12), quand l'élément de fixation (38, 40) est dans sa position de montage dans ledit intérieur (10) dudit véhicule (12).

7. Agencement de fixation (92, 94) comprenant un élément de fixation (38, 40) selon l'une quelconque des revendications 1 à 6 et un socle de fixation (58, 60), ledit socle de fixation (58, 60) comprenant :
- une partie d'entrée (84) ayant une forme et une dimension transversale (d_{E}) aptes à recevoir la tête (56) dudit élément de fixation (38, 40),
- une partie de dégagement (86) ayant une dimension transversale (d_{W}), qui est inférieure à ladite dimension transversale (d_{E}) de ladite partie d'entrée (84), et
- une partie de verrouillage (88) ayant une dimension transversale (d_{L}), qui est supérieure à ladite dimension transversale (d_{W}) de ladite partie de dégagement (86), mais inférieure à ladite dimension transversale (d_{E}) de ladite partie d'entrée (84), ladite partie de dégagement (86) étant située entre ladite partie d'entrée (84) et ladite partie de verrouillage (88),
- ladite forme et ladite dimension transversale (d_{E}) de ladite partie d'entrée (84) dudit socle de fixation (58, 60) étant aptes à recevoir ladite tête (56) dudit élément de fixation (38, 40),
- ladite dimension transversale (d_{W}) de ladite partie de dégagement (86) étant inférieure à ladite seconde dimension transversale (d₂) dudit axe (54) mais supérieure à ladite première dimension transversale (d₁) dudit axe (54), et
- ladite dimension transversale (d_{L}) de ladite partie de verrouillage (88) étant supérieure à ladite première dimension transversale (d₁) dudit axe (54) mais inférieure à ladite dimension transversale (d_{H}) de ladite tête (56).

8. Agencement de fixation (92, 94) selon la revendication 7, dans lequel ladite dimension transversale (d_{L}) de ladite partie de verrouillage (88) dudit socle de fixation (58, 60) est supérieure à ladite seconde dimension transversale (d₂) dudit axe (54) dudit élément de fixation mais inférieure à ladite dimension transversale (d_{H}) de ladite tête (56).

9. Agencement de fixation (92, 94) selon la revendication 7 ou 8, dans lequel ledit socle de fixation (58, 60) a une profondeur (d_{Z}) configurée pour permettre de pousser ledit élément de fixation (38, 40) sur une certaine distance dans ladite partie d'entrée (84) dudit socle de fixation (58, 60), ladite distance permettant auxdites première (d₁) et seconde (d₂) dimensions transversales dudit élément de fixation (38, 40) d'être toutes les deux situées à l'intérieur dudit socle de fixation (58, 60).

10. Agencement de fixation (92, 94) selon l'une quelconque des revendications 7 à 9, dans lequel ladite partie de dégagement (86) dudit socle de fixation (58, 60) est située à une position plus élevée dans le sens vertical que ladite partie d'entrée (84) et/ou ladite partie de verrouillage (88), quand ledit socle de fixation (58, 60) est dans son orientation de montage dans l'intérieur (10) du véhicule (12).

11. Dispositif (14) de protection de chargement comportant deux coins (24, 26) prévus pour être dans une position supérieure dans la direction verticale, quand ledit dispositif (14) de protection de chargement est monté dans un véhicule (12), ledit dispositif (14) de protection de chargement comprenant :
- une partie de tissu (20) pliable et/ou enroulable, et
- au moins un élément de fixation (38, 40) selon l'une quelconque des revendications 1 à 6 situé dans ou au niveau d'un ou plusieurs desdits coins (24, 26).

12. Dispositif (14) de protection de chargement selon la revendication 11, dans lequel ladite partie de tissu (20) comprend une garniture (22) de bord, ladite garniture (22) de bord étant elle aussi pliable et/ou enroulable, ladite garniture (22) de bord étant constituée d'une seule pièce et entourant au moins 50 %, de préférence au moins 70 %, de préférence encore au moins 90 %, idéalement la totalité de la circonférence de ladite partie de tissu (20).

13. Véhicule (12) comprenant un agencement de fixation (92, 94) selon l'une quelconque des revendications 7 à 10 et/ou un dispositif (14) de protection de chargement selon la revendication 11 ou 12.

14. Procédé pour fixer un élément de fixation (38, 40) selon l'une quelconque des revendications 1 à 6 ou un dispositif (14) de protection de chargement selon la revendication 11 ou 12 à l'intérieur (10) d'un véhicule (12), ledit véhicule comprenant un socle de fixation (58, 60), ledit procédé comprenant les opérations consistant à :
110 : Faire entrer ladite tête (56) dudit axe (54) dudit élément de fixation (38, 40) par ladite partie d'entrée (84) dudit socle de fixation (58, 60),
120 : Ajuster la position dudit élément de fixation (38, 40) par rapport audit socle de fixation (58, 60) pour qu'elle permette audit axe (54) de franchir ladite partie de dégagement (86) au niveau de ladite première dimension transversale (d₁),
130 : Faire passer ledit élément de fixation (38, 40) à travers ladite partie de dégagement (86) dudit socle de fixation (58, 60) et le faire entrer dans ladite partie de verrouillage (88) dudit socle de fixation (58, 60).

15. Procédé selon la revendication 14, dans lequel on ajuste ledit élément de fixation (38, 40) en le poussant dans ledit socle de fixation (58, 60) et/ou en le faisant tourner afin de placer ledit axe (54) pour qu'il franchisse ladite partie de dégagement (86) au niveau de ladite première dimension transversale (d₁).
